**Europäisches Patentamt**

**European Patent Office**

**Office européen des brevets**

(11) Veröffentlichungsnummer: **0 097 931**

**A2**

(12) **EUROPÄISCHE PATENTANMELDUNG**

(21) Anmeldenummer: **83106195.7**

(22) Anmeldetag: **24.06.83**

(51) Int. Cl.³: **G 03 H 1/06**
**G 02 B 5/32**

(30) Priorität: **24.06.82 DE 3223650**

(43) Veröffentlichungstag der Anmeldung:
**11.01.84 Patentblatt 84/2**

(84) Benannte Vertragsstaaten:
**AT BE CH DE FR GB IT LI LU NL SE**

(71) Anmelder: **ESG Elektronik-System- Gesellschaft mbH**
**Vogelweideplatz 9**
**D-8000 München 80(DE)**

(72) Erfinder: **Dausmann, Günther**
**Schlachthausstrasse 9**
**D-8058 Erding(DE)**

(74) Vertreter: **Weickmann, Heinrich, Dipl.-Ing. et al,**
**Patentanwälte Dipl.-Ing. H.Weickmann Dipl.-Phys.Dr. K.**
**Fincke Dipl.-Ing. F.A. Weickmann Dipl.-Chem. B. Huber**
**Dr.-Ing. H. Liska Dipl.-Phys.Dr. J. Prechtel Möhlstrasse**
**22**
**D-8000 München 86(DE)**

(54) **Verfahren und Vorrichtung zur holographischen Aufnahme von Objekten, insbesondere von Mikrofilmen.**

㉗ Es wird ein Verfahren zur holographischen Aufnahme von Objekten, insbesondere von Mikrofilmen (MF$_1$, MF$_2$), auf einer strahlungsempfindlichen, insbesondere lichtempfindlichen Schicht (22) eines Aufnahmehologramm-Trägers (III) vorgeschlagen, bei welchem Verfahren man die von den Oberflächenpunkten (R$_2$*, R$_3$* ...) des Mikrofilms ausgehenden Strahlen auf ein entwickeltes Zwischenhologramm (18) eines Zwischenhologramm-Trägers (II) fallen läßt, welches das mit einer Zwischenhologramm-Referenz-Strahlenquelle (R$_2$) aufgenommene oder dementsprechend synthetisch erzeugte Hologramm eines Punkthologramms ist, wobei man den Mikrofilm (MF) und den Zwischenhologramm-Träger (II) derart relativ zueinander anordnet, daß die Objektpunkte als örtlich gegeneinander versetzte Zwischenhologramm-Referenz-Strahlenquellen dienen zur Rekonstruktion jeweils eines entsprechenden Punkthologramms in der Aufnahmehologramm-Schicht (22). Dann wird die Aufnahmehologramm-Schicht (22) entwickelt und schließlich zur Rekonstruktion des aufgenommenen Mikrofilms das Aufnahmehologramm (III) mit einer Wiedergabe-Referenz-Strahlenquelle (R$_1$*) bestrahlt, welche derart angeordnet ist, daß die Wie-dergabe-Referenz-Strahlenquelle (R$_1$*) die Punkthologramme der Aufnahmehologramm-Schicht (22) rekonstruiert. Dieses Verfahren kommt ohne kohärente Aufnahme-Strahlenquelle aus.

EP 0 097 931 A2

FIG. 1

<u>B e s c h r e i b u n g</u>

Die Erfindung betrifft ein Verfahren nach dem Oberbegriff
des Anspruchs 1.

Bei der holographischen Aufnahme von Objekten läßt man üblicherweise die vom Objekt kommenden Strahlen mit Referenzstrahlen
in einer strahlungsempfindlichen Schicht eines Aufnahmehologrammträgers interferieren, um eine die Amplituden- und
Phasenverhältnisse des Objekt-Strahlungsfeldes wiedergebendes
Beugungsmuster nach Entwickeln der Aufnahmeschicht zu erhalten.
Man erhält jedoch ein klares Beugungsmuster nur dann, wenn die
von unterschiedlichen Richtungen einfallenden Objekt- und Re-
ferenz-Strahlen zur Erzeugung des gleichbleibenden Interferenzmusters interferenzfähig sind, also zeitlich und räumlich kohärent sind. Für die Hologrammaufnahme kommt daher in erster
Linie der Laser als Beleuchtungsstrahlenquelle in Frage. Bei
der Hologramm-Rekonstruktion ist eine Kohärenz der Referenzstrahlen nicht erforderlich, da die Hologrammerzeugung als
reine Beugung ähnlich der Beugung an einem Strichgitter oder
einer Fresnel'schen Zonenplatte betrachtet werden kann. Es
kann also  inkohärentes und darüber hinaus auch polychromatisches
Licht       zur Hologrammrekonstruktion eingesetzt werden,
wenn auch hier Probleme mit der unterschiedlich starken Beugung der verschiedenen Frequenzen auftreten. Eine derartige
Weißlicht-Rekonstruktion ist bei den sogenannten Lippmann-Bragg-
Hologrammen möglich (Dr. Horst Kiemle, Dr. Dieter Röss "Einführung in die Technik der Holographie", Technisch-Physikalische
Sammlung, Band 8, Akademische Verlagsgesellschaft Frankfurt am
Main 1969, Seite 88).        Eine andere Art der Weißlicht-
rekonstruktion stammt von D. J. de Bitetto (s. Dr. Horst Kiemle
und Dr. Dieter Röss am angegebenen Orte Seite 92).

Die Aufgabe der Erfindung liegt darin, ein Verfahren der eingangs genannten Art anzugeben, welche die Hologrammerzeugung mit inkohärenten Strahlen erlaubt.

Diese Aufgabe wird durch die kennzeichnenden Merkmale des Anspruchs 1 in Verbindung mit den Merkmalen des Oberbegriffs gelöst.

In der Aufnahme-Hologrammschicht des Aufnahme-Hologrammträgers werden also nicht,wie bisher üblich, vom Objekt ausgehende Objektstrahlen mit von einer gesonderten Referenz-Strahlenquelle ausgehenden Strahlen zur Interferenz gebracht, sondern lediglich eine Vielzahl von in der Aufnahme-Hologrammschicht rekonstruierten Zwischenhologrammbildern aufgezeichnet. Jeder strahlende Oberflächenpunkt des Objekts erzeugt so ein Zwi-schenhologrammbild in der Aufnahme-Hologrammschicht. Da das Zwischenhologramm des Zwischenhologrammträgers das Hologramm eines Punkthologrammes ist, stellen die erwähnten rekonstruierten Zwischenhologrammbilder jeweils Punkthologramme dar, also jeweils ein Beugungsbild, welches dem Hologramm eines Punktes entspricht. Unter Punkt wird hier eine im Vergleich zur Bildfläche nach Rekonstruktion des Aufnahmehologramms kleine Flächenform verstanden, welche im Idealfall einem Punkt entspricht, aber auch andere Form haben kann, wie zum Beispiel Rechteckform und die Form eines x. Auf jeden Fall soll nach Art von Pixeln mit diesen hier Punkt genannten kleinen Flächenelementen ein punktweiser Aufbau größerer Objektbilder mit der gewünschten Auflösung möglich sein.

Die in dieser Weise mit einer Vielzahl von Punkthologrammen belichtete Aufnahme-Hologrammschicht wird anschließend entwickelt, so daß man eine entsprechende beugungsfähige Hologrammstruktur erhält. Die Rekonstruktion des aufgenommenen Objektes des Aufnahmehologramms geschieht in üblicher Weise mit Hilfe einer nicht notwendigerweise kohärenten Wiedergabe-Referenz-Strahlenquelle, wobei jedoch darauf zu achten ist, daß die räumliche Zuordnung von Wiedergabe-Referenz-Strahlenquelle und Aufnahme-Hologrammträger die gleiche ist, wie die entsprechenden Elemente bei der Punkt-Hologramm-Aufnahme, um eine Rekonstruktion der Vielzahl von in der Aufnahme-Hologrammschicht gespeicherten Hologramme zu erreichen, wobei diese rekonstruierten Punkte das aufgenommene Objekt der gewählten Auflösung entsprechend mehr oder weniger genau wiedergeben.

Das Zwischenhologramm des Zwischenhologramm-Trägers kann in der angegebenen Weise hergestellt werden, indem man als erstes das Hologramm eines Punktes aufnimmt und entwickelt, anschließend von dem das Punkthologramm darstellenden Beugungsbild ein zweites Hologramm aufnimmt, nämlich das gewünschte Zwischenhologramm. Man kann jedoch auch durch Simulierung dieser beiden Interferenzversuche (Hologrammaufnahmen) in einem Rechner und anschließendes Ausdrucken der berechneten Beugungsfigur das Zwischenhologramm synthetisch erzeugen (s. z.B. Yaroslavskii und Merzlyakov "Methods of Digital Holography" Consultants Bureau New York, London 1980). Bedarfsweise kann man auch nur einen der beiden Hologramm-Aufnahmeschritte vom Rechner durchführen lassen, also beispielsweise die Erzeugung des Punkthologramms. Ein besonderer Vorteil synthetisch erzeugter Zwischenhologramme liegt darin, daß diese ideale Flächenhologramme (im Gegensatz zu Volumenhologrammen) bilden, welche ohne weiteres mittels Weißlicht kopiert werden können, nach Art der Kopie und Vervielfältigung herkömmlicher Mikrofilme.

Im Anspruch 2 ist eine bevorzugte Ausführungsform des erfindungsgemäßen Verfahrens angegeben, welche die Verwendung einer polychromatischen Beleuchtungsquelle, gegebenenfalls eine Weißlichtquelle erlaubt, man hat folglich eine größere Freiheit bei der Wahl der Strahlungsquelle. Da praktisch sämtliche Frequenzen zur Aufzeichnung des Hologramms beitragen, ergibt sich eine Intensitäts-Erhöhung des rekonstruierten Bildes des Objektes im Vergleich mit einer monochromatischen Beleuchtungs-Strahlungsquelle und Wiedergabe-Referenz-Strahlenquelle. Der bei der Beugung der Objektstrahlen beim Durchgang durch das Zwischenhologramm auftretenden richtungsmäßigen Aufspaltung der Strahlen unterschiedlicher Frequenz mit entsprechend versetzter Erzeugung von den einzelnen Farben zugeordneter Punkthologramm-Beugungsmuster in der Aufnahmehologramm-Schicht folgt anschließend bei der Bildrekonstruktion nach dem Durchgang durch das Aufnahmehologramm eine Aufspaltung des Lichts der Wiedergabe-Referenz-Strahlenquelle in entgegengesetzter Richtung. In einer Ebene erhält man folglich eine volle Kompensation der Farbdispersion, falls der Abstand Punkthologrammträger-Punkt entsprechend dem letzten Kennzeichen des Anspruchs 2 gewählt ist. Es treten Regenbogenränder in zu dieser genannten Ebene senkrechter Richtung auf, welche jedoch im allgemeinen nicht weiter störend sind. Falls die spiktrale Zusammensetzung der Wiedergabe-Referenz-Strahlenquelle die gleiche ist wie die der Bildwiedergabe; im Falle eines Schwarzweiß-Objektes erhält man ein Schwarz-weiß-Bild.

Die Ausführungsform gemäß Anspruch 3 hat den Vorteil, daß die den einzelnen Frequenzen bei der Herstellung des Aufnahmehologramms zugeordneten Punkthologramme in beiden Richtungen gegenüber dem der Strahlenfrequenz der Punkthologramm-Referenz-Strahlenquelle versetzt sind, so daß man bei entsprechendem Verlauf der optischen Achse die geringsten Verzerrungen erhält.

Um die Speichermöglichkeiten von Hologrammen zu nützen, wird eine Mehrfachbelichtung gemäß Anspruch 4 vorgeschlagen, wobei man zwischen den Aufnahmen neben dem Objekt lediglich das Zwischenhologramm auszuwechseln hat. Bei der Bildrekonstruktion müssen dann diejenigen räumlichen Verhältnisse wieder hergestellt werden,

wie diese der Punkthologrammaufnahme bzw. der entsprechenden synthetischen Hologrammerzeugung zugrunde gelegen haben. So kann man beispielsweise unterschiedliche Punkthologramme durch Verschwenken des Punkthologrammträgers bei der Aufnahme erhalten.

In einer besonders bevorzugten Ausführungsform der Erfindung unterscheiden sich gemäß Anspruch 5 die Zwischenhologramme im Abstand aufzunehmender Punkt-Punkthologrammträger, so daß bei der Bild-Rekonstruktion keinerlei Lageveränderung von Aufnahmehologrammträger und Wiedergabe-Referenz-Strahlenquelle vorzunehmen sind; das rekonstruierte Bild erscheint in dementsprechend unterschiedlichen Bildtiefen, und zwar sämtliche in dieser Weise aufgenommenen Objekte in unterschiedlichen Tiefen gleichzeitig. Das Bild eines einzelnen Objektes kann nun durch Einstellen einer Beobachtungsoptik mit entsprechend geringer Tiefenschärfe einzeln betrachtet werden.

Aus Intensitätsgründen ist die Durchlichtanordnung gemäß Anspruch 6 bevorzugt.

Die Vorwärts-Strahlanordnung gemäß Anspruch 7 ergibt zusammen mit der Verwendung eines Spiegels eine lichtstarke, räumlich kompakte optische Anordnung.

Um möglichst hohe Bildschärfe zu erhalten, sollten die Referenz-Strahlenquellen möglichst punktförmig sein. Andererseits ist eine möglichst hohe abgegebene Strahlenintensität erwünscht, um die Belichtungszeiten niedrig zu halten. Die im Anspruch 8 angegebene Strahlenquelle besonders einfachen Aufbaus genügt diesen beiden Forderungen gleichzeitig. Eine leicht zu fertigende Ausführungsform der Lochblende ist im Anspruch 9 angegeben. Die im Anspruch 10 beanspruchte Eichskala ist von besonderem Vorteil bei dem Einsatz der erfindungsgemäßen Strahlenquelle als Wiedergabe-Referenz-Strahlenquelle und Punkthologramm-Referenz-Strahlenquelle, da beide Strahlenquellen möglichst weitgehend einander zu entsprechen haben. Die Eichskala ermöglicht eine reproduzierbare Lochblendeneinstellung.

Die in der erfindungsgemäßen Weise mittels synthetischem Zwischenhologramm erzeugten Aufnahme-Hologramme sind ebenfalls wie die Zwischen-Hologramme ideale Flächen-Hologramme, so daß diese gemäß den Ansprüchen 13 - 15 mittels herkömmlichem Schwarz-Weiß-Film unter Verwendung einer Weißlichtquelle vervielfältigt werden können. Hierfür bietet sich eine herkömmliche Mikrofilm-Kopierein-richtung an.

Die Erfindung betrifft ferner ein Verfahren zur holo-graphischen Datenspeicherung, insbesondere zur holo-graphischen Speicherung von Mikrofilmdaten, wobei man auf einen lichtempfindlichen Hologrammträger ein Hologramm eines mit einem Objektstrahl beleuchteten Datenträgers optischer Daten, ggf. eines Mikrofilms, aufnimmt durch Überlagerung eines Referenzstrahles mit dem vom Datenträger emittierten Licht auf dem Hologrammträger und wobei man zur Datenwiedergabe mit einem optischen Aufnahmesystem, insbesondere einer Videokamera, das durch Einstrahlung des Referenzstrahles auf den entwickelten Hologrammträger rekonstruierte Hologramm aufnimmt.

Um die Abspeicherung und den Zugriff einer erhöhten Menge an optischen Daten auf einfache Weise zu ermöglichen, geht man erfindungsgemäß vor, daß man den Hologrammträger mehrfach belichtet mit Einzelhologrammen von Datenträgern, die von Einzelhologramm zu Einzelhologramm in bezug auf den Hologrammträger unterschiedlich angeordnet, vorzugsweise hintereinander gestaffelt sind, und/oder mit Einzelhologrammen, bei denen von Einzelhologramm zu Einzelhologramm der Referenzstrahl mit unterschiedlichem Einstrahlwinkel auf den Hologrammträger fällt, und daß man zur Wiedergabe des Bildes eines einzelnen Datenträgers den entsprechenden Einstrahlwinkel einstellt und die Aufnahmeoptik des Aufnahmesystems auf das Hologrammbild dieses Datenträgers fokussiert.

Der von dem erfindungsgemäß hergestellten Hologramm erfaßte Raum wird durch die Einzelhologrammaufnahmen der unterschiedlich angeordneten Datenträger voll zur Datenspeicherung ausgenutzt. Aufgrund der Einzelaufnahmetechnik, bei der ggf. jeweils nur ein einziger Datenträger aufgenommen wird, ergeben sich keinerlei gegenseitige Behinderungen der Datenträger; ferner entfällt das Problem der gegenseitigen Abschattung in bezug auf den Objektstrahl und der gegenseitigen Abdeckung in bezug auf das Hologramm. Es hat sich herausgestellt, daß durch entsprechende Fokussierung der Aufnahmeoptik des Aufnahmesystems bei der Hologrammrekonstruktion auch die Bilder hintereinander gestaffelt aufgenommener Datenträger jeweils gesondert aufnehmbar sind, was insbesondere darauf zurückzuführen ist, daß aufgrund der Kleinheit der Datenträger, insbesondere im Falle von Mikrofilm-Datenträgern, sich ein mikroskopähnlicher Strahlengang in der Aufnahmeoptik ergibt, so daß, wie bei der Mikroskopie durchscheinender räumlicher Objekte, z.B. von Zellen, der Beobachtungsgegenstand (hier das Hologrammbild) schichtweise beobachtet werden kann, ohne daß die gerade nicht beobachteten Höhenschichten zu einer störenden Abdeckung der gerade beobachteten Schicht führen. Die Rekonstruktion eines Programmbildes erfordert, daß der Referenzstrahl unter den gleichen Bedingungen auf den (entwickelten) Hologrammträger fällt wie bei der Belichtung des Hologramms auf dem Hologrammträger. Ist diese Bedingung nicht erfüllt, so kommt es auch nicht zur Erzeugung des Raumbildes. Dies wird durch die Erfindung ausgenutzt, indem mehrere Einzelhologramme mit unterschiedlichen Einstrahlwinkeln des Referenzstrahles auf dem Hologrammträger belichtet und bei der Wiedergabe durch entsprechende Einstellung des Einstrahlwinkels nacheinander wieder erzeugt werden.

Zur weiteren Verbesserung der Ausnutzung des Hologrammträgers für die Datenspeicherung kann dieser gemäß einer Weiterbildung der Erfindung in wenigstens zwei Teilbereichen mit unterschiedlichen Einzelhologrammen belichtet werden. Die Grenze für eine derartige Unterteilung bildet das Auflösungsvermögen, welches entsprechend der Reduzierung der Teilbereichsflächen abfällt.

Die Erfindung betrifft auch eine Vorrichtung zur holographischen Datenspeicherung nach dem erfindungsgemäßen Verfahren mit

- einer Quelle für kohärentes, monochromatisches Licht,
- einem Strahlteiler im Lichtstrahl der Quelle zur Erzeugung eines Referenzstrahles und eines Objektstrahles,
- einer den Referenzstrahl auf einen fotoempfindlichen Hologrammträger werfenden Strahlführungsoptik,
- einer den Objektstrahl auf den jeweiligen Datenträger, insbesondere Mikrofilm, werfenden Strahlführungsoptik,
- einem optischen Aufnahmesystem für das rekonstruierte Hologramm.

Um die Hologrammbilder hintereinander gestaffelt aufgenommenen Datenträger bei der Rekonstruktion sauber voneinander trennen zu können, wird vorgeschlagen, daß die Tiefenschärfe der Optik des optischen Aufnahmesystems kleiner ist als der Abstand der hintereinander gestaffelt aufgenommenen Datenträger.

Zur Einstellung des jeweiligen Einstrahlwinkels, unter dem

-9-

der Referenzstrahl auf den Hologrammträger fällt, mit einfachen Mitteln, wird vorgeschlagen, daß der Hologrammträger schwenkbar gelagert ist. Es sei darauf hingewiesen, daß der Einstrahlwinkel in diesem Zusammenhang ganz allgemein als räumliche Einstellung des Strahls gegenüber den drei Raumachsen des Hologrammträgers definiert ist und beispielsweise durch die drei Eulerwinkel charakterisiert werden kann.

In einer besonders einfach aufgebauten, einfach zu bedienenden Ausführungsform der Erfindung ist vorgesehen, daß der Hologrammträger, die Optik des Aufnahmesystems sowie eine Hologrammaufnahmehalterung für die Datenträger um einen gemeinsamen Drehpunkt drehbar gelagert sind, vorzugsweise mittels eines gemeinsamen Trägers. Das Aufnahmesystem kann daher unabhängig vom Einstrahlwinkel stets zu eine optimalen Lage gegenüber dem Hologrammträger beibehalten, insbesondere diejenige Lage, in der der Hologrammträger senkrecht zur Beobachtungsachse steht. Da die Hologrammaufnahmehalterung mitverschwenkt wird, befinden sich die Einzelhologrammbilder stets im gleichen Aufnahmebereich, so daß auch von daher keine Änderung der Einstellung des Aufnahmesystems erforderlich ist.

Das Aufnahmesystem kann eine Videokamera und/oder eine Mattscheibe zur direkten Betrachtung umfassen. Auf der Mattscheibe läßt sich durch entsprechende Einstellung der Aufnahmeoptik eine das gewünschte Datenträgerbild zeigende Tiefenschicht des räumlichen Hologrammbildes abbilden.

Um Teilbereiche des Hologrammträgers mit Einzelhologrammen belichten zu können bzw. diese Einzelhologramme wieder rekonstruieren zu können, wird eine bewegliche Blende zur Ausblendung von Teilbereichen des Hologrammträgers vorgeschlagen.

Die Erfindung wird im folgenden anhand der Zeichnung an einem bevorzugten Ausführungsbeispiel erläutert. Es zeigt:

Fig. 1 eine vereinfachte Schemadarstellung des Strahlengangs einer erfindungsgemäß ausgebildeten Hologrammaufnahme- und Wiedergabevorrichtung;

Fig. 2 eine Lochblende als Teil einer erfindungsgemäßen Strahlenquelle;

Fig. 3 in einer Schemadarstellung die Erzeugung eines Punkthologramms;

Fig. 4 die Erzeugung eines Zwischenhologramms als Hologramm des gemäß Fig. 3 erzeugten Punkthologramms;

Fig. 5 die Erzeugung eines Aufnahmehologramms mit Hilfe des Zwischenhologramms gemäß Fig. 4;

Fig. 6 die Rekonstruktion der im Aufnahmehologramm gespeicherten Information;

Fig. 7 die Erzeugung eines Aufnahmehologramms mit Hilfe des gemäß Fig. 4 erzeugten Zwischenhologramms, jedoch mit mehrfarbiger Zwischenhologramm-Referenz-Strahlenquelle und

Fig. 8 die Rekonstruktion der im Aufnahmehologramm gemäß Fig. 7 gespeicherten Informationen mit Hilfe einer mehrfarbigen Wiedergabe-Referenz-Strahlenquelle;

Fig. 9 eine vereinfachte Schemadarstellung des Strahlengangs einer zweiten erfindungsgemäßen Ausführungsform einer Hologrammaufnahme- und Wiedergabevorrichtung.

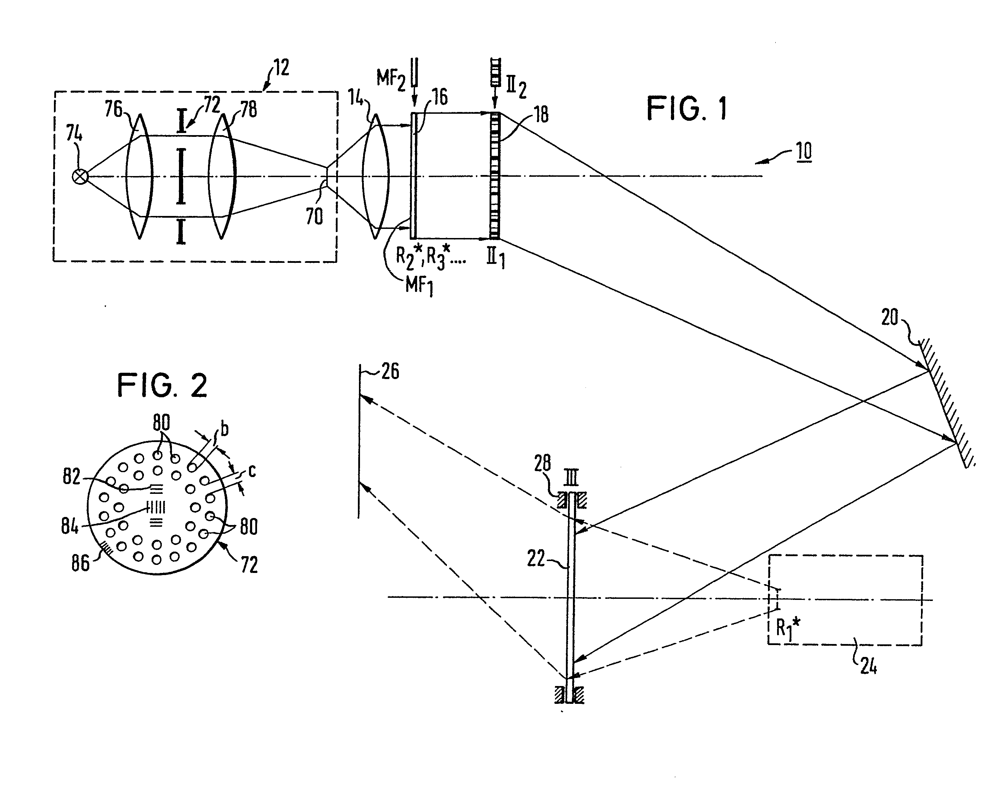

Die in Fig. 1 stark vereinfacht dargestellte Vorrichtung 10 zur holografischen Aufnahme und Wiedergabe von Objekten, insbesondere von Mikrofilmen (MF), besteht aus den folgenden Hauptkomponenten: einer Beleuchtungs-Strahlenquelle 12 mit anschließender Beleuchtungsoptik 14 zur gleichmäßigen Ausleuchtung des nachfolgenden Objektes in Durchlicht-Anordnung, einem durch Schwärzungsstriche angedeuteten entwickelten Zwischenhologramm 18 auf einem mit II bezeichneten Zwischenhologramm-Träger, einem Umlenkspiegel 20 sowie einem mit III bezeichneten Aufnahmehologramm-Träger, dessen Aufnahmehologramm-Schicht der Aufnahme der in ihr erzeugten Beugungsstruktur dient und nach erfolgter Aufnahme und anschließender Entwicklung das Aufnahmehologramm bildet, welches zur Rekonstruktion der entsprechenden im Hologramm gespeicherten Information von einer Wiedergabe-Referenz-Strahlenquelle 24 durchleuchtet wird. Das rekonstruierte Bild kann (im Falle eines reellen Bildes) auf einer Mattscheibe 26 aufgefangen werden oder (im Falle eines virtuellen Bildes) direkt oder unter Zuhilfenahme einer Beobachtungsoptik beobachtet werden. In Fig. 1 ist der die Rekonstruktion der im Aufnahmehologramm gespeicherten Information betreffende Teil der Vorrichtung 10, also der Wiedergabeteil, lediglich strichliert gezeichnet, um hierdurch anzudeuten, daß die Bildrekonstruktion die Entwicklung des aufgenommenen Hologramms in der Aufnahmehologramm-Schicht 22 voraussetzt, also nicht gleichzeitig mit der holografischen Aufnahme erfolgen kann. Auch kann der die Wiedergabe-Referenz-Strahlenquelle 24, eine Halterung 28 für den Wiedergabehologramm-Träger III sowie den Schirm 26 bzw. eine nicht dargestellte Beobachtungsoptik umfassende Wiedergabeteil getrennt vom eigentlichen Aufnahmeteil aufgestellt werden, wobei zur Rekonstruktion lediglich der entsprechende, entwickelte Aufnahmehologramm-Träger III in die Halterung 28 einzusetzen ist.

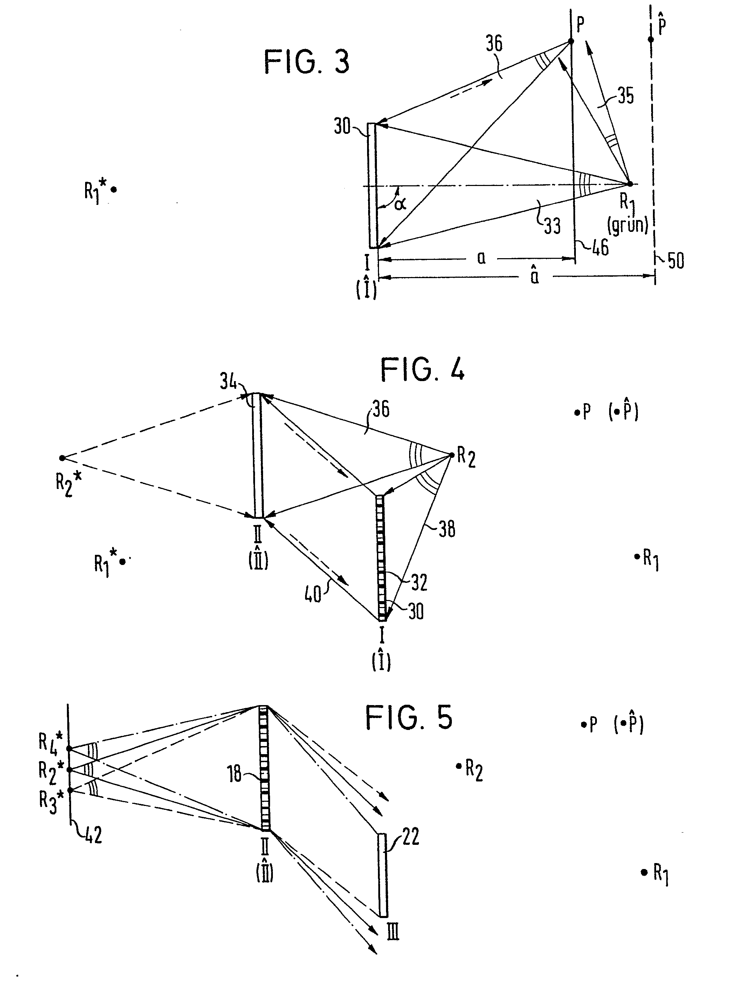

Das Zwischenhologramm 18 des Zwischenhologrammträgers II kann, wie in den Fig. 3 und 4 angedeutet ist, durch doppelte Hologrammaufnahme hergestellt werden. Als erstes wird gemäß Fig. 3 das Hologramm eines Punktes P aufgenommen, in dem in üblicher Weise die von einer kohärenten monochromatischen Punkthologramm-Referenz-Strahlenquelle $R_1$ ausgehenden Strahlen in zwei Teilstrahlen aufgeteilt werden,

wobei ein Teilstrahl 33 unmittelbar auf eine strahlenempfindliche Schicht 30 eines Punkthologramm-Trägers I gelenkt wird und ein anderer Teilstrahl 35 auf den abzubildenden Punkt P. Der vom Punkt P als neue Strahlungsquelle nach dem Huygen'schen Prinzip ausgehende Strahl 36 wird mit dem direkten Referenzstrahl 33 in der Schicht 30 zur Interferenz gebracht. Die resultierende Beleuchtungsintensitätsverteilung innerhalb der Schicht 30 führt nach durchgeführter Entwicklung zu einem optischen Beugungsmuster, welches in Fig. 4 durch Schwärzungsstriche in der Schicht 30 symbolisiert ist und mit 32 bezeichnet werden soll. In Fig. 3 ist eine mit $R_1$* bezeichnete Referenz-Strahlenquelle angedeutet, welche in Bezug auf die Ebene des Hologrammträgers I symmetrisch zur Referenz-Strahlenquelle $R_1$ liegt. Bei Beleuchtung des entwickelten Punkthologramms 32 des Punkthologramm-Trägers I vom Punkt $R_1$* aus ergibt sich üblicherweise die Rekonstruktion des Punktes P am in Fig. 3 dargestellten unveränderten Ort. Es ist natürlich auch eine Rekonstruktion vom Punkt $R_1$* aus möglich.

Das Beugungsmuster des Punkthologramms 32 dient als Objekt für den zweiten Aufnahmeschritt, nämlich für die Aufnahme des Zwischenhologramms 18 in der strahlenempfindlichen Schicht 34 des mit II bezeichneten Zwischenhologramm-Trägers.
Als Referenz-Strahlenquelle $R_2$ dient wiederum eine kohärente, monochromatische Strahlenquelle. Der von der Strahlenquelle $R_2$ ausgehende, direkt auf·die Schicht 34 fallende Strahl ist mit 36 bezeichnet und der auf das Punkthologramm 32 fallende Strahl mit 38. Der vom Punkthologramm 32 ausgehende Objektstrahl ist mit 40 bezeichnet. Dieser interferiert in der Schicht 34 mit dem Strahl 36. Auch hier ist wiederum der komplementäre Punkt $R_2$* angedeutet, welcher auf der anderen Seite des Zwischenhologramm-Trägers II symmetrisch zum Punkt $R_2$ liegt. Eine entsprechende Strahlenquelle in diesem Punkt $R_2$*würde, nach entsprechender Belichtung der Schicht 34 eine Rekonstruktion des Punkthologramms 32 am vormaligen Orte des Punkthologramm-Trägers I zur Folge haben.

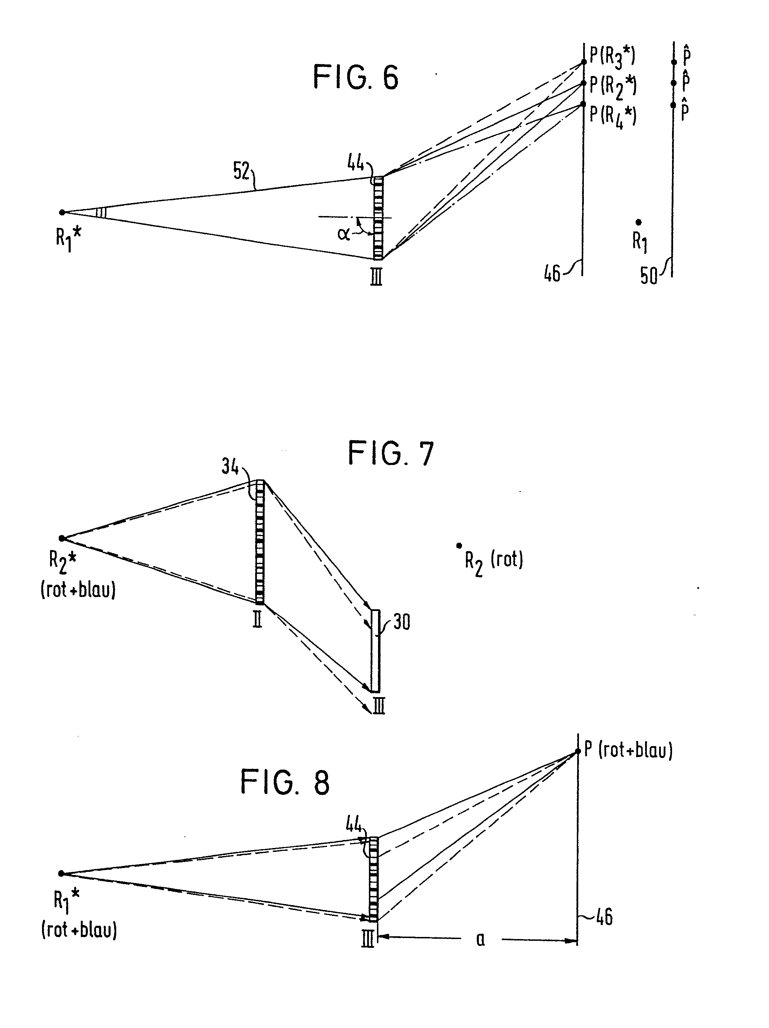

Dies ist in Fig. 5 angedeutet. Zur Aufnahme des rekonstruierten Inhalts des Zwischenhologramms 18, also zur Aufnahme des Punkt-Hologramm-Beugungsbildes, wird an dem vormaligen Ort des Punkthologramm-Trägers I der Aufnahmehologramm-Träger III gesetzt, welcher die strahlungsempfindliche Schicht 22 trägt. Bei Beleuchtung des Zwischenhologramms 18 vom Punkt $R_2^*$ aus ergibt sich also die Rekonstruktion des Punkthologramms innerhalb der Schicht am Orte des vormaligen Punkthologramms des Punkthologramm-Trägers I. Beleuchtet man dagegen das Zwischenhologramm 18 von einer anderen Stelle aus, beispielsweise vom Punkt $R_3^*$ aus, so verlagert sich das rekonstruierte Punkthologramm in der Schicht 22 entsprechend. In Fig. 5 sind neben dem Punkt $R_2$ zwei weitere Punkte $R_3^*$ und $R_4^*$ dargestellt, welche in einer zur Ebene des Zwischenhologramms 18 parallelen Ebene 42 liegen. Um die entsprechende Verlagerung des reproduzierten Punkthologramms anzudeuten, ist der vom Punkt $R_2^*$ ausgehende Strahlenverlauf mit durchgezogener Linie angedeutet, der vom Punkt $R_3^*$ ausgehende Strahlenverlauf mit strichlierter Linie und der vom Punkt $R_4^*$ ausgehende Strahlenverlauf mit strichpunktierter Linie. Man erkennt, daß bei einer Verlagerung der Strahlenquelle nach oben das entsprechend rekonstruierte Punkthologramm nach unten verlagert wird. Angenommen, sämtliche dargestellten Punkte $R_2^*$, $R_3^*$ und $R_4^*$ bilden gleichzeitig entsprechende punktförmige Strahlenquellen, so werden in der Schicht 22 gleichzeitig drei übereinander liegende rekonstruierte Punkthologramme erzeugt. Eine Kohärenz der jeweiligen Strahlenquellen ist hierbei nicht erforderlich, da eine solche Kohärenz zur Rekonstruktion von Hologrammen nicht notwendig ist. Die Strahlenquellen können auch polychromatische Strahlung angeben, gegebenenfalls sogar Weißlicht; hierbei ist jedoch zu beachten, daß die Beugung an Beugungsstrukturen, insbesondere Hologrammen, stets zu einer spektralen Aufspaltung führt, welche jedoch teilweise kompensiert werden kann, wie anhand der Fig. 7 und 8 noch nachfolgend erläutert werden wird.

Bestrahlt man nun das entwickelte Aufnahmehologramm 44 des Aufnahmehologramm-Trägers III (am vormaligen Orte des Hologrammträgers I) vom Punkt $R_1$* aus, so führt dies zur Rekonstruktion des Inhalts der drei, den drei Strahlenquellen an den Punkten $R_2$*, $R_3$* und $R_4$* zugeordneten Punkthologramme, die das Aufnahmehologramm 44 bilden. Die Rekonstruktion des dem unverrückten Punkt $R_2$* entsprechenden Punkthologramms ergibt den ursprünglichen Punkt P gemäß Fig. 3. Das höhergelegene, dem Punkt $R_3$* entsprechende Punkthologramm rekonstruiert den höhergelegenen Punkt P ($R_3$*) und dementsprechend das dem Punkt $R_3$* zugeordnete Punkthologramm den tiefergelegenen Punkt P ($R_4$*).

Das gemäß Fig. 6 aus drei Punkten P bestehende rekonstruierte Bild entspricht demnach, bis auf Maßstabsfaktoren, der Anordnung der Punkte $R_2$*, $R_3$*, $R_4$* bei der Wiedergabehologramm-Aufnahme gemäß Fig. 5. Diese Punkte $R_2$*, $R_3$*, $R_4$* können als das aufzunehmende Objekt bezeichnet werden. Diese strahlenden Punkte können natürlich auch an anderen Stellen der Ebene 42 liegen, sofern sie nur ein Punkthologramm in der Schicht 22 des Aufnahmehologramm-Trägers III rekonstruieren. Es lassen sich also beliebige Hell-Dunkel-Strukturen innerhalb der Ebene 42 als Objekt aufnehmen und in der Ebene 46 der Punkte P als Bild rekonstruieren. Wenn man die Ebene 42 genügend weit vom Zwischenhologramm-Träger II entfernt, so daß ebene Wellenfronten auf den Zwischenhologramm-Träger II auftreffen, was auch durch Zwischenschaltung einer entsprechenden Linse zwischen der Ebene 42 und dem Zwischenhologramm-Träger II erreicht werden kann, so kommt es nicht mehr darauf an, daß die Punkte $R_2$*, $R_3$*, $R_4$* innerhalb der Ebene 42 liegen. Man kann in einer derartigen Anordnung also auch von einem räumlichen Objekt ein in der Ebene 46 liegendes, flächiges Abbild entsprechend einer herkömmlichen Fotografie erhalten.

Mit Hilfe der erfindungsgemäßen Anordnung lassen sich auch mehrere Objekte durch entsprechende Mehrfachbelichtung der Schicht 22 des Aufnahmehologramm-Trägers III aufnehmen. Um bei der Bildrekonstruktion die aufgenommenen Objekte voneinander trennen zu können, ist es lediglich erforderlich, unterschiedliche Aufnahmebedingungen bei den Einzelbelichtungen einzurichten und diese Bedingungen bei der Rekonstruktion zu berücksichtigen. Zu den Aufnahmebedingungen gehören die Umstände der Aufnahme des Punkthologramms gemäß Fig. 3. Nimmt man beispielsweise anstelle eines Hologrammes des Punktes P ein Hologramm des Punktes $\hat{P}$ gemäß Fig. 3 auf, wobei der Abstand $\hat{a}$ des Punkts $\hat{P}$ von der Ebene des Punkthologramm-Trägers I größer ist als der Abstand a des Punktes P von dieser Ebene, und fertigt man anschließend ein Zwischenhologramm (Zwischenhologramm-Träger $\hat{II}$) dieses modifizierten Punkthologramms, so kann man in der nicht entwickelten, strahlenempfindlichen Schicht 22 des Aufnahmehologramm-Trägers III eine weitere Aufnahme machen, und zwar im allgemeinen eines neuen Objekts. Bei der Rekonstruktion gemäß Fig. 6 werden sowohl die bei der Aufnahme mit Hilfe des Zwischenhologramm-Trägers II aufgenommenen Punkte rekonstruiert, als auch die bei der nachfolgenden Aufnahme mit Hilfe des modifizierten Zwischenhologramm-Trägers $\hat{II}$. Die jeweiligen Punkte liegen jedoch entsprechend dem unterschiedlichen Abstand der Punkte P und $\hat{P}$ bei der Punkthologramm-Aufnahme gemäß Fig. 3 in unterschiedlichen Tiefen. Zur Vereinfachung der Darstellung ist in den Fig. 5 und 6 angenommen, daß die strahlenden Objektpunkte $R_2^*$, $R_3^*$ und $R_4^*$ bei beiden Teilaufnahmen dieselben sind, so daß man dementsprechend bei der Rekonstruktion gemäß Fig. 6 in gleicher Höhe, jedoch auf verschiedenen Ebenen 46 und 50 liegende Objektpunkte P und $\hat{P}$ erhält. Will man bei der Rekonstruktion lediglich ein einziges Tiefenbild, beispielsweise die Punkte $\hat{P}$ auf der Tiefenebene 50 beobachten, so ist es lediglich erforderlich, eine Beobachtungsoptik auf die Tiefenebene 50 (bei virtuellem Bild) zu fokussieren.

Zur Unterscheidung der einzelnen Objekte bei Mehrfachaufnahme kann man jedoch auch Wiedergabehologramme verwenden, deren zugrundeliegende Punkthologramme sich beispielsweise durch unterschiedlichen Einstrahlwinkel $\alpha$ des Referenzstrahls 33 in Bezug auf die Punkthologramm-Ebene unterscheiden. Bei der Bildrekonstruktion gemäß Fig. 6 muß zur Rekonstruktion eines gewünschten Bildes der entsprechende Einstrahlwinkel $\alpha$ des Referenzstrahls 52 bezüglich der Wiedergabehologramm-Ebene eingestellt werden.

Wie bereits erwähnt, kann sowohl die Beleuchtungsquelle $R_2^*$ als auch die Wiedergabe-Referenz-Quelle $R_1^*$ polychromatische Strahlen abgeben. Nimmt man beispielsweise gemäß Fig. 7 an, daß das Zwischenhologramm 34 des Zwischenhologramm-Trägers II mit Hilfe einer rote Strahlen abgebenden Strahlenquelle im Punkte $R_2$ hergestellt worden ist, so ergibt sich bei einer Rekonstruktion durch eine ebenfalls rote Strahlen aussende de Strahlenquelle am Punkte $R_2^*$ eine Punkthologramm-Rekonstruktion in der lichtempfindlichen Schicht 30 des Aufnahmehologramm-Trägers III am vormaligen Orte des Punkthologramm-Trägers I. Gibt die Strahlenquelle im Punkt $R_2^*$ darüberhinaus auch noch blaue Strahlen ab, so werden diese von der Beugungsfigur des Zwischenhologramms 34 vergleichsweise stärker gestreut, was ein dementsprechend in Fig. 7 nach unten verlagertes rekonstruiertes Punkthologramm in der Schicht 30 ergibt. Angenommen, die Schicht 30 ist gleichermaßen empfindlich für rote und blaue Strahlen, so erhält man nach der Entwicklung ein Aufnahmehologramm 44, welches aus den gegeneinander örtlich versetzten, der roten bzw. der blauen Strahlung zugeordneten Punkthologrammen besteht.

Die Anordnung bei der Rekonstruktion gemäß Fig. 8 ist nun derart gewählt, daß die durch das Aufnahmehologramm 44 tretenden Strahlen von der Hologramm-Beugungsfigur im entgegengesetzten Sinne wie Fig. 1, also nach oben gebeugt werden.

Der Abstand a bei der Punkthologramm-Aufnahme gemäß Fig. 3 ist nun derart gewählt, daß diejenigen blauen Strahlen der ebenfalls rote und blaue Strahlen aussendenden Referenz-Strahlenquelle $R_1^*$ , welche vom tieferliegenden (von der blauen Aufnahmestrahlung in Fig. 7 erzeugten) Punkthologramm gebeugt werden, sich im Punkt P der Ebene 46 mit denjenigen roten Strahlen treffen, welche vom höherliegenden Hologramm innerhalb des Aufnahmehologramms 44 gebeugt werden. Die Farbdispersion ist folglich in der Zeichenebene der Fig. 8 vollständig kompensiert, nicht jedoch in Richtung senkrecht dazu, so daß dementsprechende Regenbogenränder der rekonstruierten Objekte auftreten.

Das Zwischenhologramm 18 des Zwischenhologramm-Trägers II läßt sich auch synthetisch erzeugen. Hierbei kann man beispielsweise so vorgehen, daß man die beiden aufeinanderfolgenden Hologrammaufnahmen gemäß Fig. 3 und 4 rechnersimuliert und das sich ergebende Zwischenhologramm über einen entsprechend fein auflösenden Drucker ausgibt.

Im folgenden soll noch kurz die Strahlenquelle 12 gemäß Fig. 1 und 2 erläutert werden, welche in ihrem Aufbau der Strahlenquelle 24 entspricht. Die eigentliche Strahlenquelle 70 wird von dem verkleinerten, reellen Bild einer Lochblende 72 (siehe Fig. 2) gebildet, welche rückwärtig von einer Primär-Strahlenquelle 74 beleuchtet ist. Das entsprechende Linsensystem ist durch die beiden Sammellinsen 76 und 78 zwischen der Strahlenquelle 74 und der Blende 72 bzw. der Blende 72 und dem reellen Bild 70 angedeutet, wobei die Primär-Strahlenquelle 74 im Brennpunkt der Sammellinse 76 und das reelle Bild 70 im Brennpunkt der Sammellinse 78 liegt. Die Lochblende 72 weist mehrere Reihen von Blendenlöchern 80 auf, wobei diese Reihen auf zueinander konzentrischen Kreisen liegen. Der Durchmesser der Lochblende 72 beträgt etwa 30 mm. Der Lochdurchmesser b beträgt 0,15 mm, der lichte Abstand c benachbarter Löcher 80 etwa 0,3 mm. Der Verkleinerungsfaktor der Optik beträgt 1:300, so daß man dementsprechend eine Lichtquelle erhält aus einer Vielzahl von angenähert punktförmigen Einzelquellen (Durchmesser 0,005 mm).

Um eine bestimmte Blendeneinstellung reproduzieren zu können, ist die Lochblende 72 mit entsprechenden Eichskalen versehen, wobei in Fig. 2 eine horizontale Eichskala mit 82, eine vertikale Eichskala mit 84 und eine Winkelskala mit 86 bezeichnet sind.

Die Primärquelle 74 kann gemäß der Erfindung sowohl bei der Strahlenquelle 12 als auch bei der Strahlenquelle 24 von einer inkohärenten Lichtquelle gebildet sein, beispielsweise einer Weißlichtquelle. Verwendet man eine Strahlenquelle 24 mit Lochblende 72 bei der Rekonstruktion des Wiedergabehologramms, so ist es natürlich erforderlich, daß zur Herstellung des Punkthologramms gemäß Fig. 3 eine dementsprechend mit Lochblende identischer Lage und Orientierung verwendet wird, wobei jedoch als Primärstrahlenquelle lediglich eine kohärente                    Strahlenquelle in Frage kommt.

Zur Fig. 1 sei noch erwähnt, daß dort, zur Veranschaulichung der Mehrfachbelichtung der Schicht 22 des Wiedergabehologramm-Trägers III, oberhalb des mit $MF_1$ bezeichneten Mikrofilms ein weiterer Mikrofilm $MF_2$ angedeutet ist, welcher nach erfolgter Aufnahme des Mikrofilms $MF_1$ diesen ersetzt. Dementsprechend ist oberhalb des mit $II_1$ bezeichneten Zwischenhologramm-Trägers ein zweiter Zwischenhologramm-Träger $II_2$ angedeutet, welcher den Träger $II_1$ ersetzt, wenn der Mikrofilm $MF_2$ aufgenommen wird.

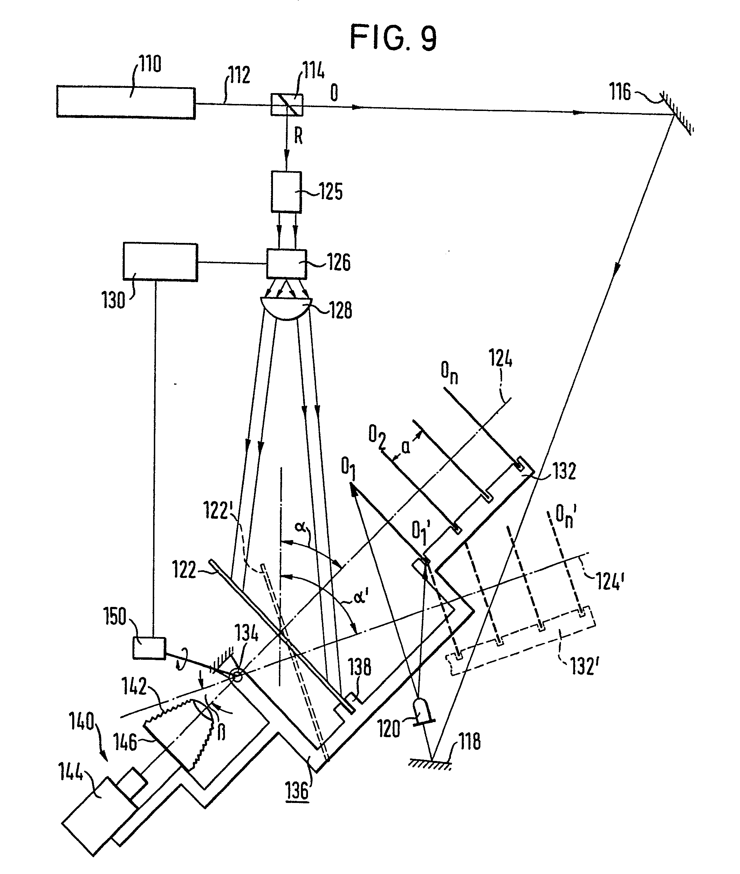

Ein Laser 110 der in der Figur 9 dargestellten Anordnung zur holographischen Datenspeicherung gibt einen monochromatischen, kohärenten Lichtstrahl 112 ab, welcher auf einen Strahlteiler 114 z.B.mit einemhalbdurchlässigen Spiegel fällt. Der Strahlteiler 114 gibt einen (hier unreflektierten) Objektstrahl O ab sowie einen in der Figur nach unten weg reflektierten Referenzstrahl R . Der Objektstrahl trifft auf einen ersten Ablenkspiegel 116 sowie anschließend auf einen zweiten Ablenkspiegel 118.Anschließend fällt der Objektstrahl O durch eine von einem Mikroskopobjektiv gebildete Beleuchtungsoptik 120 zur Beleuchtung der aufzunehmenden optischen Datenträger, die in der Abbildung mit $O_1$ bis $O_n$ bezeichnet sind. Die Datenträger werden von Mikrofilmen gebildet. Das vom jeweils belichteten Datenträger $O_1$ bis $O_n$ reflektierte Licht fällt auf einen lichtempfindlichen Hologrammträger 122 unter Überlagerung mit dem unter einem Winkel $\alpha$ bezüglich der Flächennormalen 124 des Hologrammträgers 122 einfallenden Referenzstrahl R.

Der Referenzstrahl R hat dabei vorher der Reihe nach einen Strahlaufweiter (Beamexpander) 125, ein Ablenksystem 126 sowie ein Divergier-Optik 128 durchlaufen. Das Ablenksystem kann von einer Steuerung 130 aus derart angesteuert werden, daß der Referenzstrahl auf vorgegebene Teilbereiche des Hologrammträgers 122 fällt.

Zur Halterung der einzelnen Datenträger $O_1$ bis $O_n$ gestaffelt längs der Normalen 124 ist eine in der Figur schematisch angedeutete Hologrammaufnahmehalterung 132 vorgesehen mit Aufnahmeschlitzen für die einzelnen Datenträger. Diese Halterung 132 ist um eine ortsfeste Drehachse 134 drehbar gelagert und zwar mit Hilfe eines ebenfalls nur symbolisch angedeuteten Schwenkrahmens 136. Die Drehachse verläuft parallel zur Ebene des Hologrammträgers 122 auf dessen von den Datenträgers $O_1$ bis $O_n$ abgelegenen Seite

und schneidet die Normale 124. Am Schwenkrahmen 136 ist auch eine Halterung 138 für den Hologrammträger 122 befestigt und somit mitverschwenkbar. Mit unterbrochenen Umrißlinien sind die mit 122' bzw. 132' bezeichneten Positionen von Hologrammträger und Hologrammaufnahmehalterung in einer weiteren möglichen Schwenkstellung des Schwenkrahmens 136 dargestellt. Der Winkel zwischen der Normalen 124' und dem Referenzstrahl R beträgt hier $\alpha'$.

Am Schwenkrahmen 136 ist ferner ein allgemein mit 140 bezeichnetes optisches Aufnahmesystem angedeutet mit einer Aufnahmeoptik 142 und einer anschließenden Videokamera 144. An der Rückseite der Aufnahmeoptik 142 kann eine Mattscheibe 146 zur direkten Beobachtung einer Tiefenschicht des räumlichen Hologrammbildes vorgesehen sein. Für die Videoaufnahme dieser Tiefenschicht kann die Mattscheibe 146 ggf. entfernt werden. Die optische Achse des Aufnahmesystems 140 fällt mit der Flächennormalen 124 des Hologrammträgers 122 zusammen. Auch das optische System 140 ist auf dem Schwenkrahmen 136 befestigt und somit gemeinsam und gleichzeitig mit dem Hologrammträger 122 und der Hologrammaufnahmehalterung 132 um die Drehachse 134 verschwenkbar.

Die Herstellung eines eine Vielzahl von Datenträgerbildern insbesondere Mikrofilmbildern, aufweisenden Hologramms mit Hilfe der vorbeschriebenen Anordnung geht auf die folgende Weise vor sich:

Als erstes wird beispielsweise der mit $O_1$ bezeichnete Datenträger auf die Hologrammaufnahmehalterung 132 aufgesteckt und von diesem eine Einzelhologrammaufnahme durch entsprechende Überlagerung des reflektierten Lichtes mit dem Referenzstrahl R auf dem gesamten Hologrammträger 122 oder einem Teilbereich des Hologrammträgers erzeugt. Anschließend wird der Datenträger $O_1$ entfernt und ein weiterer Daten-

träger $O_2$, insbesondere ein weiterer Mikrofilm, auf die Hologrammaufnahmehalterung 132 aufgesteckt und wiederum ein Einzelhologramm auf dem nach wie vor lichtempfindlichen Hologrammträger 122 erzeugt (nach Art einer Mehrfachbelichtung). Der Staffelabstand a zwischen den Datenträgern $O_1$ bis $O_n$ liegt im Bereich der optischen Schärfentiefe und kann, insbesondere 1 mm bis mehrere cm, bevorzugt etwa 10 mm betragen. Die rechteckigen Datenträger haben, von der Lichtstärke des Lasers abhängig, ein Format insbesondere bis DIN A 5. Auf jeden einzelnen Mikrofilm können mehrere DIN A 4 Seiten abgebildet werden.

Nach der erfolgten Einzelbelichtung der hintereinander gestaffelten Datenträger $O_1$ bis $O_n$ mit n beispielsweise = 5, kann der Hologrammträger zur Fixierung des Hologramms entwickelt werden, falls die im folgenden noch zu beschreibende zusätzliche Speichermöglichkeit durch Aufnahme von Einzelhologrammen mit unterschiedlichen Einstrahlwinkeln $\alpha$ nicht genutzt werden soll.

Das demnach fertigentwickelte Hologramm auf dem Hologrammträger 122 wird zur Rekonstruktion des räumlichen Hologrammbildes nurmehr mit dem Referenzstrahl R beleuchtet, woraufhin dem den Hologrammträger 122 von der Gegenseite her (in der Figur von links unten) betrachtenden Beobachter sich das Hologrammbild bietet, welches hier aus der hintereinander gestaffelten Reihe der Datenträger $O_1$ bis $O_n$ an den jeweiligen Aufnahmeorten besteht. Die Aufnahmeoptik 142 besteht aufgrund der Kleinheit der Bilder der Datenträger $O_1$ bis $O_n$ aus einer Mikroskop-Optik, deren Tiefenschärfe kleiner ist als der Staffelabstand a. Auf der Mattscheibe 146 kann daher durch entsprechende Einstellung der Aufnahmeoptik 142 auf ein beliebiges der Bilder der Datenträger $O_1$ bis $O_n$ fokussiert werden, wobei die restlichen Bilder aufgrund des großen Beobachtungswinkels nicht störend in Erscheinung treten.

Dieses Mattscheibenbild kann nun von der Videokamera 144 aufgenommen werden; die Mattscheibe 146 kann auch im Bedarfsfalle herausgeschwenkt werden, falls die Optik der Videokamera 144 dementsprechend ausgelegt ist.

Falls der Hologrammträger 122 in Teilbereichen mit unterschiedlichen Einzelhologrammen belichtet worden ist, ist für die jeweilige Wiedergabe lediglich der Referenzstrahl R durch die Steuerung 130 auf den entsprechenden Teilbereich des Hologrammträgers 122 zu richten. In einer nicht dargestellten Ausführungsform kann auch eine mechanische Lochblende zum Ausblenden des jeweiligen Teilbereiches vorgesehen sein.

Zur weiteren Ausnutzung der Hologramm-Speichermöglichkeit können Einzelhologramme mit unterschiedlichem Einstrahlwinkel $\alpha$ des Referenzstrahls R erzeugt werden. So kann beispielsweise nach der vorstehend beschriebenen Hologrammaufnahme der Datenträger $O_1$ bis $O_n$ der Schwenkrahmen 136 um einen Winkel $\beta = \alpha' - \alpha$ verschwenkt werden. In dieser neuen Stellung können wiederum Einzelhologramme von weiteren Datenträgern $O_1'$ bis $O_n'$ aufgenommen werden durch entsprechendes Nacheinandereinstecken der Datenträger in die verschwenkte Hologrammaufnahmehalterung 132' Zur Beleuchtung der Datenträger ist ggf. die Beleuchtungsoptik 120 nachzustellen. In Weiterbildung der Erfindung kann die Beleuchtungsoptik 120 auch am Schwenkrahmen 136 mitverschwenkbar angebracht sein, wobei dann der Umlenkspiegel 118 zweckmäßigerweise in der Drehachse 134 angeordnet ist (und zwar außerhalb des Strahlengangs der Aufnahmeoptik 142, was natürlich auch für das Drehlager des Schwenkrahmens 135 gilt).

Der Schwenkwinkel $\beta$ zwischen aufeinanderfolgenden Winkeleinstellungen beträgt beispielsweise 30$^\circ$.

Die Abbildungsoptik 120 kann mit auf den Einzelhologrammen abgebildet sein, so daß die Abbildungsoptik bei der Rekonstruktion entfallen kann.

Bei der Hologrammkonstruktion der in den einzelnen Drehlagen aufgenommenen Hologramme ist lediglich exakt der gleiche Einstrahlwinkel $\alpha$ wie bei der Hologrammaufnahme einzustellen, ggf. mit Hilfe eines an die Steuerung 130 angeschlossenen Schwenkantriebs 150 für den Schwenkrahmen 136. Da stets nur dann ein räumliches Bild entsteht, wenn der Einstrahlwinkel $\alpha$ der Hologrammaufnahme mit dem Einstrahlwinkel bei der Hologrammrekonstruktion übereinstimmt, lassen sich die bei einem bestimmten Einstrahlwinkel aufgenommenen Hologramme unabhängig von den anderen Hologrammen gesondert wiedergeben.

P a t e n t a n s p r ü c h e

1. Verfahren zur holographischen Aufnahme von Objekten (16), insbesondere von Mikrofilmen (MF), auf einer strahlungsempfindlichen, insbesondere lichtempfindlichen Schicht (22) eines Aufnahmehologramm-Trägers (III), dadurch gekennzeichnet, daß man die von den Oberflächenpunkten des Objekts (16) ausgehenden Strahlen auf ein (entwickeltes) Zwischenhologramm (18) eines Zwischenhologramm-Trägers (II) fallen läßt, welches das mit einer Zwischenhologramm-Referenz-Strahlenquelle ($R_2$) aufgenommene oder dementsprechend synthetisch erzeugte Hologramm eines gegebenenfalls synthetisch erzeugten Punkthologrammes (32) ist, wobei man das Objekt (16) und den Zwischenhologramm-Träger (II) derart relativ zueinander anordnet, daß die Objektpunkte als örtlich gegeneinander versetzte Zwischenhologramm-Referenz-Strahlenquellen ($R_2^*$, $R_3^*$, ...) dienen zur Rekonstruktion jeweils eines entsprechenden Punkthologramms in der strahlenempfindlichen Aufnahmehologramm-Schicht (22) des Aufnahmehologramm-Trägers (III), daß man die Aufnahmehologramm-Schicht (22) entwickelt, und daß man zur Rekonstruktion des aufgenommenen Objektes das Aufnahmehologramm (44) mit einer Wiedergabe-Referenz-Strahlenquelle ($R_1^*$ ...) bestrahlt, wobei die räumliche Zuordnung von Wiedergabe-Referenzstrahlenquelle ($R_1^*$ ...) und Aufnahmehologramm-Träger (III) der tatsächlichen oder angenommen räumlichen Zuordnung von Punkthologramm-Referenz-Strahlenquelle ($R_1$) und Punkthologramm-Träger (I) bei der Punkthologramm-Aufnahme bzw. bei der synthetischen Hologrammerzeugung entspricht, so daß die Wiedergabe-Referenz-Strahlenquelle ($R_1^*$) die Punkthologramme in der Aufnahmehologramm-Schicht (30) rekonstruiert.

2. Verfahren nach Anspruch 1,
   dadurch gekennzeichnet, daß man bei der Herstellung des Aufnahmehologramms das Objekt mit Strahlen einer polychromatischen Beleuchtungs-Strahlungsquelle, vorzugsweise Weißlichtquelle, beleuchtet, daß man eine für diese polychromatische Strahlung empfindliche Aufnahmehologramm-Schicht verwendet zur gleichzeitigen Aufnahme von den einzelnen Strahlfrequenzen zugeordneten, aufgrund der unterschiedlichen Beugung am Zwischenhologramm gegenseitig versetzten Zwischenhologrammen, daß man zur Rekonstruktion des aufgenommenen Objektes eine Wiedergabe-Referenz-Strahlenquelle vorzugsweise mit Strahlen ähnlicher oder im wesentlichen gleicher spektraler Zusammensetzung einsetzt und daß man bei der Punkthologrammaufnahme bzw. der dementsprechenden synthetischen Erzeugung des Zwischenhologramms den Abstand Punkthologrammträger-Punkt derart wählt, daß bei der Rekonstruktion des aufgenommenen Objektes die von den den einzelnen Strahlfrequenzen zugeordneten Zwischenhologrammen in der Aufnahmehologramm-Schicht erzeugten Punktbilder, vorzugsweise jeweils erster Ordnung, der jeweiligen Objektpunkte im wesentlichen zusammenfallen.

3. Verfahren nach Anspruch 2, dadurch gekennzeichnet, daß man bei der Punkthologramm-Aufnahme eine monochromatische Hologramm-Referenz-Strahlenquelle ($R_1$) einsetzt bzw. der synthetischen Hologrammerzeugung zugrundelegt, deren Strahlenfrequenz im Mittelbereich der vorkommenden Strahlfrequenzen der das Objekt beleuchtenden polychromatischen Strahlenquelle liegt.

4. Verfahren nach einem der vorhergehenden Ansprüche, dadurch gekennzeichnet, daß man zur hintereinander erfolgenden Einzelaufnahme mehrerer Objekte, gegebenenfalls Mikrofilme, auf einem einzelnen Aufnahmehologramm durch Mehrfachbelichtung der Aufnahmehologramm-Schicht, von Einzelaufnahme zu Einzelaufnahme sich unterscheidende Zwischenhologramme einsetzt, welche sich durch unterschiedliche
tatsächliche oder angenommene Anordnung der drei Elemente, Punkthologramm-Referenz-Strahlenquelle, aufzunehmender Punkt und Punkthologramm-Träger bei der
Punkthologramm-Aufnahme bzw. bei der entsprechenden
synthetischen Hologrammerzeugung unterscheiden.

5. Verfahren nach Anspruch 4, dadurch gekennzeichnet, daß
sich die Zwischenhologramme durch unterschiedlich tatsächlichen oder angenommenen Abstand zwischen aufzunehmendem Punkt und Punkthologramm-Träger bei der Punkthologramm-Aufnahme bzw. bei der entsprechenden synthetischen
Hologrammerzeugung unterscheiden.

6. Verfahren nach einem der vorhergehenden Ansprüche, dadurch gekennzeichnet, daß man das Objekt, gegebenenfalls
den Mikrofilm, durchstrahlt (Durchlichtanordnung).

7. Verfahren nach einem der vorhergehenden Ansprüche, dadurch gekennzeichnet, daß man das Zwischenhologramm des
Zwischenhologramm-Trägers durchstrahlt (Vorwärtsstrahl-
Anordnung) und daß man die durchlaufenden Strahlen, vorzugsweise nach Umlenkung über einen Spiegel, in der Aufnahmehologramm-Schicht des Aufnahmehologramm-Trägers auffängt.

8. Strahlenquelle als Beleuchtungsquelle oder Zwischenhologramm-Referenz-Strahlenquelle oder Punkthologramm-Referenz-Strahlenquelle zur Durchführung des Verfahrens nach
einem der vorhergehenden Ansprüche, dadurch gekennzeichnet, daß diese vom verkleinerten, reellen Bild (70) einer
rückwärtig von einer Primär-Strahlenquelle (74) angestrahlten Lochblende (72) gebildet ist.

9. Strahlenquelle nach Anspruch 8, dadurch gekennzeichnet, daß die Lochblende (72) eine Vielzahl von vorzugsweise in mehreren Reihen auf zueinander konzentrischen Kreisen angeordneten Blendenlöchern (80) aufweist.

10. Strahlenquelle nach Anspruch 8 oder 9, dadurch gekennzeichnet, daß die Lochblende (72) mit wenigstens einer Eichskala (82; 84; 86) versehen ist.

11. Vorrichtung zur Durchführung des Verfahrens nach einem der Ansprüche 1 bis 7, gekennzeichnet durch eine Beleuchtungsquelle (12), gegebenenfalls Weißlichtquelle, zur Beleuchtung, vorzugsweise Durchleuchtung, des jeweiligen Objekts (16), einen von den Objektstrahlen beleuchteten Zwischenhologramm-Träger (II) mit einem Zwischenhologramm (18) als Hologramm eines Punkthologramms (32), und einen Aufnahmehologramm-Träger (III) mit einer strahlenempfindlichen Aufnahmeschicht (22) zur Aufnahme von Punkthologrammen, welche von den Objektpunkten als Referenz-Strahlenquellen ($R_2^*$, $R_3^*$, $R_4^*$) des Zwischenhologramms (18) rekonstruiert werden.

12. Vorrichtung nach Anspruch 11, dadurch gekennzeichnet, daß zur Aufnahme mehrerer Objekte, gegebenenfalls Mikrofilme ($MF_1$, $MF_2$), unterschiedliche Zwischenhologramme ($II_1$; $II_2$) zwischen Objekt und Aufnahmehologramm-Träger (III) einsetzbar sind.

13. Verfahren zur photographischen Vervielfältigung eines gemäß dem Verfahren nach einem der Ansprüche 1 - 7 hergestellten Aufnahmehologramms unter Verwendung eines synthetisch erzeugten Zwischenhologramms, dadurch gekennzeichnet, daß man einen Schwarz-Weiß-Film, vorzugsweise Diazo-Film zur Hologrammvervielfältigung einsetzt.

14. Verfahren nach Anspruch 13, dadurch gekennzeichnet, daß man zur Filmbelichtung eine Weißlichtquelle einsetzt.

15. Verfahren nach Anspruch 13 oder 14, dadurch gekennzeichnet, daß man zur Hologrammvervielfältigung eine Mikrofilm-Kopiereinrichtung einsetzt.

FIG. 1

FIG. 2

# FIG. 3

$R_1^*$ •

# FIG. 4

$R_2^*$

$R_1^*$ •

• P  (•$\hat{P}$)

• $R_1$

# FIG. 5

$R_4^*$

$R_2^*$

$R_3^*$

• P  (•$\hat{P}$)

• $R_2$

• $R_1$

FIG. 6

FIG. 7

FIG. 8

# FIG. 9